# EUROPEAN PATENT APPLICATION

(11) **EP 2 657 511 A1**
(43) Date of publication of application: **30.10.2013**
(21) Application number: 12165298.6
(22) Date of filing: 24.04.2012
(51) Int. Cl.: F03B 13/20

(54) **Water wave energy converter**

(71) Applicant: Nederlandse Organisatie voor Toegepast -Natuurwetenschappelijk Onderzoek TNO, 2628 VK Delft (NL)
(72) Inventor: van Overbeek, Antonius Bernardus, 2628 VK Delft (NL); Green, Kirk, 2628 VK Delft (NL)
(74) Representative: Jansen, Cornelis Marinus

(57) **Abstract**

A wave energy converter has a first and second body (10, 12), the first body (10) floating in the water, the second body (12) being arranged to be able to move relative to the first body (10), for example within the first body. The second body (12) may be resiliently coupled to the first body (10). During operation a brake (22) is put on upward movement of the first body (10) while a level of the water rises relative to the first body (10) during passage of a wave. As a result the first and second body may come to a standstill. After the wave level has risen, the braking (22)is released, which sets the first body (10) into a sudden motion that launches the second body (12) into movement relative to first body (10). Energy is then collected form the relative movement between the first and second bodies.

## Description

### Field of the invention

The invention relates to a water wave energy converter and method of converting water wave energy. Such converters serve as a source of renewable energy by harnessing the natural energy present in waves.

### Background

A water wave converter, converts energy from sea waves or waves in other water basins into usable energy such as electrical energy. Shortly called "wave converters" in this context, different types of wave converters can be distinguished based on the number of floating bodies used. In a one body solution, energy may be derived from the movement of one floating body relative to the sea bottom. In a two body solution, energy may be derived from the relative movement of two bodies. Within the two body solution, a first solution can be distinguished wherein both bodies move in direct response to the waves, at least partly independently of each other, and a solution with one of the bodies moving within the other, the latter floating on the waves. Examples of these different types of converters are described in WO 2009083982, US2009146429 and WO2010047677 respectively.

When there are waves, the waves act to move the water surface relative to the floating body or bodies. This results in a force on the body, in proportion to the relative movement of the body and the water surface. The natural response of the body is an oscillating up and down motion at a natural frequency. When the water surface falls and rises continually, this results in a driven oscillator motion of the body following the frequency of the waves.

In a wave energy converter with a single floating body, such as WO2009083982, the body moves up and down relative to a structure that is fixed on the sea floor and relative motion between the floating body and the fixed structure drives an electrical generator, or other energy collector that is connected to the floating body and the fixed structure. WO2009083982 teaches that more energy can be collected by temporarily fixing the floating body to the fixed structure at the top and bottom of the waves. This has the effect that the floating body shoots up with increased oscillation amplitude once it is released.

US2009146429 uses two floating bodies. The bodies are adapted to have mutually different natural oscillation frequencies, at which they would move up and down in an oscillating motion when left on their own. The natural oscillation frequencies are adapted so that they lie above and below the wave frequency. As a result a relative motion between the bodies arises. The relative motion is then converted into useable energy, for example, by an electrical generator.

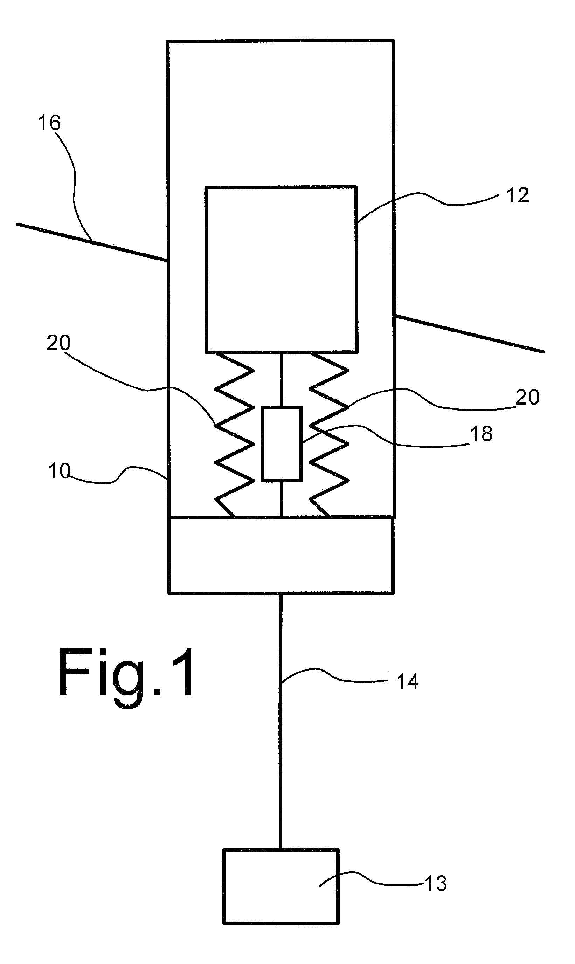

Figure 1 schematically shows a prior art two-body wave energy converter buoy with an internally moving body within another body known from WO2010047677.The wave energy converter buoy of this type has a primary body 10 interconnected to a secondary body 12. The primary body floats on the water, anchored to the sea bed by means of an anchoring point such as an anchor or weight 13 and a mooring line 14 coupled between first body 10 and the anchoring point. In operation, primary body 10 oscillates up and down on the waves. Primary body 10 is resiliently coupled to the secondary body 12 (the coupling is symbolized by springs 20), allowing the latter to move relative to primary body 10 when primary body 10 is subjected to rising and lowering of the water surface 16. A generator 18 is drivingly connected between the primary and secondary bodies 10, 12.

### Summary

Among others, it is an object to increase power output from a wave energy converter that derives energy from relative motion between a first and second body.

A method of converting water wave energy into useable energy is provided, the method comprising
- providing a first and second body, the first body floating in the water, the second body being arranged movably relative to the first body;
- braking upward movement of the first body while a level of the water rises relative to the first body during passage of a wave along the first body;
- launching the second body into movement relative to first body with a force created by releasing said braking after the level of the water has risen during said braking
- collecting energy form the relative movement of the first and second body.

Braking the first body during a time interval in which the water level rises (e.g. holding the first body at a fixed height) makes it possible to pass more energy into the relative motion of the first and second body than when first body is allowed to move unhindered. When the first body is released it will be accelerated longer and/or with a larger acceleration.

In an embodiment, braking may be engaged when the first body reaches its lowest point of motion in a wave trough, for example. Braking may be disengaged during the subsequent rise of the water level. In an embodiment, this is done once during a wave period. In other embodiments, the braking may be engaged and disengaged a plurality of times during the same rise of the water level from a wave trough.

A wave energy converter is provided, comprising:
- a first and second body, the first body being arranged to float on water, the second body being arranged movable relative to the first body,
- an energy generator coupling the first and second body, for converting motion of the first body relative to the second body into useable energy,
- a switchable hold and release mechanism that is switchable between a hold mode and a release mode, wherein the hold and release mechanism brakes and releases upward motion of the first body respectively;
- a control mechanism configured to keep the holding mechanism in the hold mode, during a part of a wave period during which a height of the water rises relative to the first body.

In an embodiment, the control mechanism may be configured to switch the holding mechanism to the hold mode when the first body reaches its lowest point of motion under influence of a wave trough, for example. The control mechanism may be configured to switch out of the hold mode during the subsequent rise of the water level. In an embodiment, the control mechanism may be configured to do so once during the rising part of a wave period. In other embodiments, the control mechanism may be configured to switch out of the hold mode a plurality of times during the rising part of a same wave period, and back to the hold mode in between. This may increase energy output form differential motion between the first and second body.

The energy generator may be an electrical generator, coupled between the first and second body and configured to convert relative motion of the first and second body into electrical energy.

In an embodiment, a resilient coupling is provided between the first and second body, which gives rise to an resonance mode of the wave energy converter which determines the amplitude variation between the first and second body, at a first resonance frequency that is higher than a second resonance frequency of the combination of the first and second body floating in water. The resilient coupling defines the resonance frequency of the relative vibrations from which energy is generated. Using a high resonance frequency makes it possible to collect energy from the relative motion more effectively. In an embodiment, the first resonance frequency is at least twice as high as the second resonance frequency.

In an embodiment, the hold and release mechanism comprises
- a drum attached to the first body, for receiving a mooring line that is coupled between the first body and an anchoring point,
- a winding mechanism configured to wind the mooring line on the drum when the first body moves downward;
- a hold mechanism configured as a brake release of the mooring line when in the hold mode. In this way, a simple self driven mechanism is provided.

Further advantageous aspects of the invention are given in the dependent claims.

### Brief description of the drawings

These and other objects and advantages will become apparent from a description of exemplary embodiments using the following figures.
- Figure 1: depicts a prior art wave energy converter
- Figure 2: depicts a wave energy converter with a braking mechanism.
- Figure 3: illustrates wave energy conversion
- Figure 4: shows a wave energy converter with an adaptive control system

### Description of exemplary embodiments

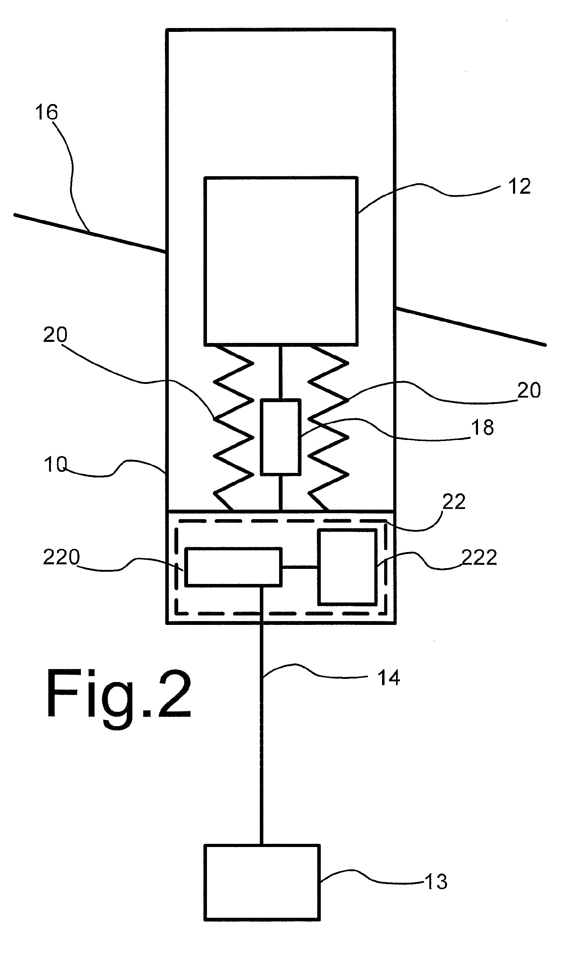

Figure 2 schematically shows an embodiment of a wave energy converter. The wave energy converter comprises a first body 10, a second body 12, a resilient coupling 20 between the first and second bodies 10, 12, an electrical generator 18, and a hold and release mechanism 22 coupling first body 10 to mooring line 14.

First body 10 may be a buoy designed to float in a body of water which has wave energy to be captured. That is, its volume is larger than a volume of water with the same weight as the energy converter. Typically first body 10 is higher than normal wave heights. First body 10 may have a cylindrical shape with a height of twenty meters and a diameter of five meters, for example. In an embodiment, first body 10 has an empty mass of qqq kilogram and second body 12 has an empty mass of qqq kilogram.

Second body 12 is located inside first body 10 and is coupled to first body 10 via resilient coupling 20. This allows second body 12 to move relative to first body 10. The combination of the stiffness of resilient coupling 20 and the masses of the first and second bodies 10, 12 is chosen so that the natural frequency of the oscillation mode due to the spring force between the first and second bodies 10, 12 is substantially higher than the natural frequency of the oscillation of first body 10 relative to the water surface due to buoyant forces.

Generator 18 operates to convert relative mechanical motion between first body 10 and second body 12 into electrical energy. Generator 18 is shown symbolically. In an exemplary embodiment, generator 18 may have a stator part attached to first body 10 and a rotor part mounted rotatably in the stator part, the rotor part being driven by an endless belt that is set in motion by second body 12. The endless belt may run around the rotor part and turning points attached to first body 10, second body 12 being attached to the endless belt. Other examples of generator 18 include a generator that uses linear motion, the rotor being replaced by magnet and/or coil attached to second body 12, which moves up and down in a stator attached to first body 10.

Hold and release mechanism 22 connects mooring line 14 to first body 10. The function of hold and release mechanism 22 is to hold first body 10 at a fixed vertical level by means of mooring line 14, or more generally brake the first body's upward movement during a time interval in the wave period. Hold and release mechanism 22 starts holding (or more generally braking) at the start of the time interval and permits (increased) upward movement at the end of the time interval.

Release of hold and release mechanism 22 allows first body 10 to start moving upward. As a result of the upward motion of first body 10 resilient coupling 20 is compressed, which in turn results in a force that sets second body 12 in motion relative to first body 10. Without damping, the relative motion between the first and second bodies 10, 12 would be an oscillating movement. The stiffness of resilient coupling 20 may be selected so that an oscillation frequency of this oscillating movement is considerably higher than the wave frequency. Electrical generator 18 converts the oscillatory relative movement of the first and second bodies 10, 12 into electrical energy. As a result the relative movement is damped.

The release of hold and release mechanism 22 provides that a higher amplitude of relative oscillatory movement of the first and second bodies 10, 12 is realized than would arise from wave driven forces of first body 10 only. Thus more relative motion energy is produced. In an embodiment, additional energy may be pumped into the relative movement by reengaging and disengaging hold and release mechanism 22 a plurality of times during a single rising phase of first body 10 on a wave.

Mechanically, the first and second body can be modelled as a first and second mass, the mass of first body 10 being exposed to a buoyancy force that changes in proportion to changes in its vertical position relative to the water surface, and a mutual force between the first and second bodies 10, 12, due to the action of resilient coupling 20 and generator 18. The mass of second body 12 is exposed to the reverse of the mutual force. The buoyancy force can be expressed as -C1*(x1-h(t)), wherein x1 is the vertical position of first body 10 and h(t) is the height of the water surface, which depends on time due to waves. C1= A*D*g is a stiffness constant, which is equal to the horizontal cross-sectional area A of first body 10, times water density D (weight per unit volume) times the acceleration of gravity g. The mutual force on first body can be expressed as -C2*(x1-x2) - v*d(x1-x2)/dt, wherein C2 is the stiffness constant of resilient coupling 20, x2 is the vertical position of second body 10, and v represents the effect of generator 18.

The force terms can be distinguished into a time dependent external force part that does not depend on body position and a time independent internal part that does. The water height variation h(t) results in an external driving force part C1*h(t). The other force components give rise to two natural vibration modes, roughly corresponding to a first mode (differential mode) wherein the first and second bodies 10, 12 vibrate relative to each other under influence of resilient coupling 20 and a second mode (common mode) wherein first and second body vibrate with a common motion relative to the water surface, under influence of the buoyancy force.

The energy in the modes is proportional to the square of the displacement amplitude in the mode and the square of its resonance frequency. The stiffness C2 of resilient coupling 20 is designed to make the resonance frequency of the first mode much higher than that of the second mode. Thus, the first mode is a high frequency mode and the second mode is a low frequency mode, the terms high and low being defined relative to each other.

In an approximation, the square of the resonance frequency of the high frequency mode is C2*(1/m1+1/m2), where m1 and m2 are the masses of the first and second bodies 10, 12 and the resonance frequency of the low frequency mode is C1/(m1+m2). Thus, the ratio of the resonance frequencies of the high and low frequency modes is (C2/C1)*[(m1+m2)²/(m1*m2)] in this approximation. The combination of stiffness C2 and the masses m1, m2 has values that make the ratio of the resonance frequencies ratio substantially greater than one, for example at least four. In this approximation first and second body 12 moves in opposite direction to each other in the high frequency mode, with a ratio of m2/m1 between displacements x1/x2 of the first and second bodies 10, 12, and first and second body 12 move with equal displacement in the low frequency mode.

### Operation

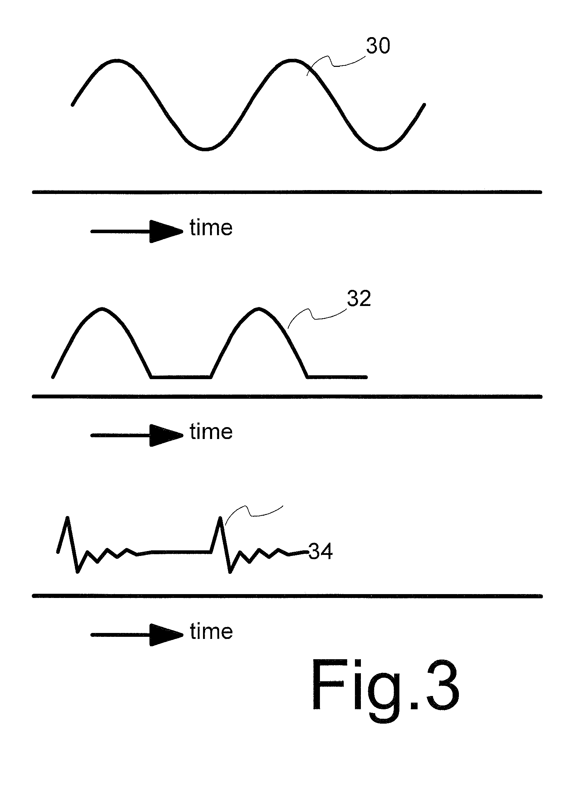

Figure 3 schematically shows the operation of the hold and release mechanism, in terms of comparative motion as a wave passes by. A first curve 30 schematically shows wave height as function of time, a second curve 32 shows height of first body 10 and a third curve 34 shows distance between first and second body. It can be seen that instead of rising when the wave rises, the first body 10 is held for a limited time interval so that the water level can rise relative to first body 10 during that time interval. At the end of the time interval, after the water has risen, the first body 10 is released which causes it to rise more rapidly, accelerated by a higher force than would have occurred without prior holding. This excites a larger amplitude in the vibrating motion.

Initially this motion is a combination of a driven motion part, at the frequency of the external wave, and a natural motion part, at the resonance frequencies of the natural vibration modes of the system. As noted, the combination of the first and second body has two main natural vibration modes, a high frequency mode that derives mainly from the resilient coupling between the first and second bodies 10, 12 and low frequency mode mainly due to buoyant force on first body 10. The combination of the masses of first and second body and the stiffness of the resilient coupling between the first and second bodies 10, 12 is designed to make the resonance frequency of the high frequency mode substantially higher (e.g. at least four times higher) than the resonance frequency of the low frequency mode. The energy in the high frequency mode is much higher in proportion to its amplitude. Electric generator 18 derives energy from the relative motion, that is, mainly from the high frequency mode, which dampens the amplitude of the high frequency mode.

The water exerts a buoyant force that is proportional to the volume of first body 10 below the time dependent water surface level. The rise and fall of the water surface in waves results in a time-variable buoyant force on first body 10 at a frequency that is closer to the resonance frequency of the low frequency mode than to the resonance frequency of the high frequency mode. The resonance frequency of the low frequency mode may be near the frequency of the waves for example. Without hold and release mechanism 22, movement of the first and second bodies 10, 12 would occur almost entirely at the frequency of the wave motion. At this frequency first body 10 more or less pushes second body 12 along at a low frequency, and the energy in the high frequency mode is relatively small.

The rise of the water surface while first body 10 is held results in an increasing buoyant force on first body 10. As long as hold and release mechanism 22 holds first body, this force is compensated by mooring line 14. Once first body 10 is released, its resulting large upward acceleration results in a displacement that causes a further force on second body 12 due to the action of resilient coupling 20. Compared to motion without a hold mode, holding results in a more sudden and larger force on first body 10 when hold and release mechanism 22 switches from the hold mode.

Electric generator 18 derives energy from the relative motion of first and second body, which mainly comes from the high frequency natural motion in the high frequency mode. Energy conversion by electric generator 18 dampens the relative motion and the high frequency mode amplitude.

In principle increased energy output can be achieved with any of a number of selections of the time interval during which hold and release mechanism 22 is engaged. It is preferred to engage (start holding) a soon as possible, when first body 10 starts to move upwards. Hold and release mechanism 22 may be disengaged for example when the wave at first body 10 reaches its highest point, or earlier, with the time duration between release and at a time when the wave at first body 10 reaches its highest point equal to the time needed for first body 10 to rise to its maximum velocity.

Alternatively hold and release mechanism 22 may engage and disengage a plurality of times during the rise of the wave at first body 10. Hold and release mechanism 22 may engage and disengage for example each time when the relative motion between the first and second bodies 10, 12 has substantially dampened out. Thus more energy can be pumped into the high frequency mode. In a further embodiment, hold and release mechanism 22 may engage and disengage in phase with the relative motion between the first and second bodies 10, 12, engaging (holding) each time when second body 12 starts to move towards first body 10 and disengaging each time when second body 12 starts to move away from first body 10. In this way more energy can be pumped into the vibration, if damping by generator 18 allows for oscillatory movement. In an embodiment, hold and release mechanism 22 may engage and disengage in this way only at selected motion reversals, when the natural vibration has dampened by more than a predetermined factor. In another embodiment, hold and release mechanism 22 may engage and disengage in this way at each motion reversal. In this way more energy can be pumped into the vibration.

Although it is preferred that first body 10 starts to be held and is released at time points that maximize energy output, it should be appreciated that an energy gain compared to not holding first body 10 can be realized also when sub-optimal time points are used. Hold and release mechanism 22 may be configured to start holding first body 10 some time interval after reversal of its vertical motion, when first body 10 already moves upward and hold and release mechanism 22 may release first body sooner or later than optimal. When the water level relative to first body 10 increases in the hold time interval, a larger energy output may still result.

Although it is preferred that hold and release mechanism 22 holds first body 10 at a fixed height in the hold mode, it should be appreciated that a braking action that slows down upward motion of first body 10 in the hold mode rather than arresting it, can still provide for increased energy output.

### Exemplary implementation of the hold and release mechanism

In figure 2, an embodiment of hold and release mechanism 22 is shown that comprises a spring loaded rotatable drum 220 and a controller 222. One end of mooring line 14 is wound on drum 220 and the other end is attached to the sea floor. A spiral spring attached between rotatable drum 220 and first body 10 may be used for example. The spring is configured to build up tension when mooring line 14 winds off drum 220 due to rising motion of first body 10 and to release tension when downward motion of first body 10 allows drum 220 to haul in part of mooring line 14. Drum 220 has a one way braking mechanism, configured to brake rotation of the drum in a direction in which mooring line 14 winds off. A gear wheel attached to drum 220 and a ratchet may be used for example, the gear wheel having asymmetric teeth so that the teeth will lift the ratchet only when the wheel moves in one direction, when the spiral spring causes drum 220 to haul in mooring line 14.

Controller 222 is configured to disengage the one way braking mechanism with a time delay after engagement due to reversal of the direction of motion of first body 10. In an embodiment, controller 222 comprises a microcontroller circuit (not shown) and an actuator (not shown) coupled to drum 220, the microcontroller being configured to count time from the time of engagement of the one way braking mechanism (motion reversal) and to activate the actuator to disengage the braking mechanism once the count has reached a set value. The microcontroller may be configured to operate according to the position of the wave. The actuator may be configured to lift the ratchet from the gear wheel, for example.

It should be emphasized that the embodiment with a spiral spring, a gear wheel, ratchet and a microcontroller is merely shown by way of example. Many other solutions exist. For example, instead of a microcontroller a mechanical timer may be used. Instead of using a timer to control the hold time period directly, release can be controlled based on other quantities, such as the water surface height relative to first body 10 or buoyant force exerted on first body 10. Hold and release mechanism 22 may be constructed to switch to a released state when the force exerted on drum 220 exceeds a threshold, for example, by moving the ratchet to a release position once sufficient force is exerted. Hold and release mechanism 22 may comprise a water height sensor, for example, coupled to the actuator. Instead of by a gear wheel, braking may be implemented using a clamp that clamps mooring line 14. Instead of a spiral spring a motor may be used to cause drum 220 to haul in mooring line 14.

Drum 220 may be replaced by a hydraulic hauling mechanism, using a hydraulic cylinder with a piston attached to mooring line 14. In this case a hydraulic pressure reservoir may be used, coupled to the hydraulic cylinder to control the hauling force on mooring line 14. A one way valve between the reservoir and the cylinder may be used to selectively block a connection to the reservoir when the piston moves in a direction that corresponds to giving slack on mooring line 14. An overpressure valve may be used that switches to a state wherein the connection between the reservoir and the cylinder is reestablished to allow motion in that direction, when the buoyant force on first body 10 exceeds a threshold.

In an embodiment, floats are attached to mooring line 14 at a number of positions between first body 10 and the sea floor. In this way mooring line 14 is kept at an angle that approaches the vertical. This increases the effect of mooring line 14 on the height of first body 10 relative to the water surface, especially when first body 10 is used in water of large depth.

Although an embodiment has been shown wherein the resilient coupling between first and second mass is realized by a set of springs, it should be realized that other types of resilient coupling are possible, such as use of a single spring, one or more gas springs, a hydraulic spring, one or more blade springs, an elastic body between the first and second bodies 10, 12 etc. Second body 12 could float in a fluid basin (not shown) in first body 10. In some embodiments, the elastic coupling might even be omitted, as long as second body 12 is allowed to move relative to first body 10. First body 10 may launch second body 12 in flight and energy may be derived from its fall back onto first body 10.

Although an embodiment with an electrical generator has been shown, it should be appreciated that the generator may be any kind of generator which converts mechanical motion of the buoy to useful energy. A generator that converts motion into transportable forms of hydraulic pressure, gas pressure. heat or chemical energy may be used, for example. For example, a generator may be used with a piston driven in a cylinder by the relative motion between the first and second bodies 10, 12, the cylinder being coupled to a pressure vessel by valves that connect the cylinder to the pressure vessel when motion of the piston acts to increase pressure in the pressure vessel. Pressurized gas from the cylinder may provide usable energy. When an electrical generator is used, the electrical energy which is captured may be stored in a battery or transmitted to a substation via a cable, in particular a submarine cable. Alternatively the electrical energy may be used to provide power on the buoy itself for applications such as a lighting system or radio transmitter.

### Adaptation

In an embodiment, operational parameters of the hold and release mechanism 22, the first and second bodies 10, 12 and/or resilient coupling 20 are adapted to sea conditions. This may be implemented by measuring sea conditions and computing the operation parameters from the measured parameters.

Sensors for measuring sea conditions may be provided in the wave energy converters and/or in auxiliary buoys or other wave energy converters in a same sea region. The computation may be performed by a central processor on shore, the sensors being coupled to transmitters to transmit data to the central processor and the wave energy converter having a receiver to receive values of the operational parameters. In another embodiment, parameter adaptation may be performed entirely within the wave energy converter.

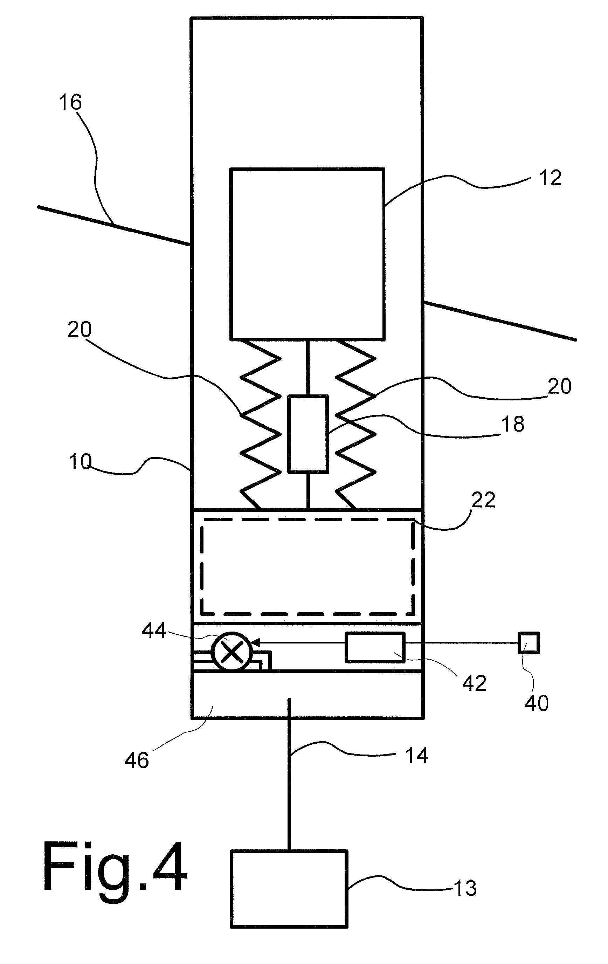

Figure 4 shows an embodiment wherein the wave energy converter comprises a sensor 40 for measuring sea conditions, a computer 42, a pump 44 and a reservoir 46 in first body 10. Computer 42 has inputs coupled to sensor 40 and outputs coupled to hold and release mechanism 22 and pump 44. Pump 44 is coupled between the outside of first body and reservoir Sensor 40 is designed to provide data that is indicative of the wave spectrum, i.e. at least a dominant wave frequency, for example, in terms of water level variation as a function of time. Computer 42 comprises a program with instructions to make computer 42 receive the data from sensor 40, to compute the operational parameters using the sensor data and to apply the operational parameters to hold and release mechanism 22 and/or to change the mass of first body. The program may be stored on a computer readable storage device such as a semiconductor memory or a disk, for example. In an embodiment, instructions to make computer 42 disable the hold function of hold and release mechanism 22 for a selected time interval and collect the data from sensor 40 during that time interval. In this way sea conditions can be measured more directly.

Many alternative types of sensors may be used. Sensor 40 may be an accelerometer attached to first body 10, for example. The measured acceleration is an indication of the force on first body 10 as a function of time, from which water level changes can be determined as a function of time. In another embodiment, sensor 40 may be a water height sensor that measures water height relative to first body 10. Relative height is related to water level variations due to inertia of first body 10. In another embodiment, a differential pressure sensor may be used, which is configured to measure a pressure difference between the air at a point on first body and water pressure at a lower point. From this water height relative to first body 10 can be determined. The wave frequency may be measured using, for example, an optical device. In this way the mechanism can be pre-programmed. It is also possible to use motion sensors or accelerometers to detect the wave position. Other types of sensor may be used as well. Instead of a single sensor 40, a plurality of sensors coupled to computer 42 may be used.

The program of computer 42 may be configured such that computer 42 adapts the mass of first body 10 by causing pump 44 to pump water into or out of reservoir 46. The mass may be adjusted to adjust the resonance frequency of the low frequency mode to the dominant wave frequency, for example. This results in larger motion of first body at the wave frequency, which has the advantage that the initial height at which first body 10 starts to be held can be made lower relative to the average water level, so that a larger force is built up when first body is released.

The program of computer 42 may be configured to cause computer 42 to adapt the duration of the time interval during which the hold and release mechanism 22 holds first body 10. When a timer is used to control holding, the duration of the timer interval may be adapted, for example. When a comparison between a threshold and measured values of other properties, such as water level or force on first body are used, computer 42 may adapt the effective threshold. Computer 42 may compute predictions of the relative motion between the first and second bodies 10, 12 for the measured wave spectrum, or generated power, given different possible selections of the time interval duration, determine the selection that will yield most relative motion of power, and set the control mechanism to realize this selection. In another embodiment, computer 42 may use a table of (optimal) control settings for different values of wave properties and set the control mechanism to realize the control setting for the measured values of wave properties. In another embodiment, a formula may be used with a similar function as the table.

Although an embodiment has been described with a measurement mode wherein computer 42 inactivates hold and release to measure wave conditions, it should be appreciated that alternatively or, in addition, wave conditions could be measured during normal operation. In this case the system can operate in a feedback relationship. An alternative way of operating the mechanism is to use real time measurements. Hence the wave position can be monitored and the signal used to control the hold and release mechanism in real time or with a slight time lag.

In a further embodiment, the wave energy converter may be provided with one or more sensors for measuring a wave condition at a distance to first body 10, and computer 42 may be configured to predict wave height at first body 10 as a function of time. In this further embodiment, computer 42 may be configured to adapt the control setting dependent on the predicted wave height, for example, by adapting the time interval that first body is held and optionally adapting the mass of first body. The one or more sensors for measuring a wave condition at a distance to first body 10 may comprise pressure or flow sensors mounted on poles extending horizontally from first body 10 below the lowest water line, a downward looking wave radar mounted on top of first body, a laser radar etc. With such sensors a map of the surrounding time and position dependent wave height can be made, which computer 42 can use as input for a program to predict future wave height at first body 10.

Although an embodiment has been shown wherein second body 12 is located inside first body 10, to allow motion of second body 12 without direct external influence, even if second body 12 is located at a height below the water level, it should be appreciated that alternatively second body 12 may be located outside first body 10, for example, in a ring around first body 10 or on top of first body 10. In such embodiments, the water level may affect second body 12 directly, but as long as a resilient coupling is provided between the masses the system exhibits different natural vibration modes that can be excited by engaging and disengaging a hold and release mechanism coupled to the first body.

In addition to, or instead of, the mooing line connection to the sea floor, a rigid structure on the sea floor, such as a rig may be used that extends to the level of the first body and the hold and release mechanism may brake first body relative to rigid structure. This makes it possible to use hold and release to gain energy also during lowering motion of the wave. However the hold and release mechanism with a mooring line connection to the sea floor, instead of a rig, considerably simplifies the system and it makes it easier to use the system at greater water depths.

Although an embodiment has been shown wherein the resonance frequency of the differential movement mode has been made much higher than that of the common movement mode, it should be appreciated that increased energy production from relative motion of first and second body can be realized with the hold and release mechanism also if the resonance frequency of the differential movement mode is not much higher than that of the common movement mode.

While the invention has been described in relation to preferred embodiments, it is to be understood that the invention is not limited thereto and that the scope of the invention is defined by the claims appended hereto.

## Claims

1. A method of converting water wave energy into useable energy, the method comprising
- providing a first and second body, the first body floating in the water, the second body being arranged to be able to move relative to the first body;
- braking upward movement of the first body while a level of the water rises relative to the first body during passage of a wave along the first body;
- launching the second body into movement relative to first body with a force created by releasing said braking after the level of the water has risen during said braking;
- collecting energy form the relative movement between the first and second bodies.

2. A wave energy converter, comprising:
- a first and second body, the first body being arranged to float on water, the second body being arranged movable relative to the first body,
- an energy generator coupled to the first and second body, for converting motion of the first body relative to the second body into useable energy,
- a switchable hold and release mechanism that is switchable between a hold mode and a release mode, wherein the hold and release mechanism brakes and releases upward motion of the first body respectively;
- a control mechanism configured to keep the holding mechanism in the hold mode, during a part of a wave period during which a height of the water rises relative to the first body.

3. A wave energy converter according to claim 2, comprising a resilient coupling between the first and second body, which gives rise to an resonance mode of the wave energy converter corresponding to an amplitude of distance variations between the first and second body, at a first resonance frequency that is higher than a second resonance frequency of the combination of the first and second body floating in water.

4. A wave energy converter according to claim 3, wherein the first resonance frequency is at least twice as high as the second resonance frequency.

5. A wave energy converter according to any of the preceding wave energy converter claims, wherein the hold and release mechanism comprises means for hauling and paying out a mooring line that is coupled between the first body and an anchoring point as well as controllably opposing said paying out of the mooring line, the control mechanism being configured to activate and deactivate said opposing of paying out of the mooring line.

6. A wave energy converter according to claim 5, comprising the mooring line and at least one float attached to the mooring line between the first body and the anchoring point.

7. A wave energy converter according to any of the preceding wave energy converter claims, wherein the hold and release mechanism comprises
- a drum attached to the first body, for receiving a mooring line that is coupled between the first body and an anchoring point,
- a winding mechanism configured to wind the mooring line on the drum when the first body moves downward;
- a hold mechanism configured to brake release of the mooring line from the drum in the hold mode.
